# EUROPÄISCHE PATENTSCHRIFT

(11) **EP 1 379 945 B1**
(45) Veröffentlichungstag und Bekanntmachung des Hinweises auf die Patenterteilung: **18.01.2006**
(21) Anmeldenummer: 02716753.5
(22) Anmeldetag: 09.02.2002
(51) Int. Cl.: G06F 9/445

(54) **VERFAHREN ZUM DURCHFÜHREN EINES UPDATES IN EINEM PROGRAMMGESTEUERTEN GERÄT, UND IN EINEM WEB-BROWSER AUSFÜHRBARER PROGRAMMCODE**
METHOD FOR CARRYING OUT AN UPDATE IN A PROGRAMME-CONTROLLED DEVICE, PROGRAMME-CONTROLLED DEVICE AND PROGRAMME CODE THAT CAN BE EXECUTED IN A WEB BROWSER
PROCEDE D'EXECUTION D'UNE MISE A JOUR DANS UN APPAREIL COMMANDE PAR PROGRAMME, ET CODE DE PROGRAMME APPLICABLE DANS UN EXPLORATEUR WEB

(30) Priorität: 20.02.2001 DE 10108142
(43) Veröffentlichungstag der Anmeldung: 14.01.2004
(73) Patentinhaber: Wiesemann & Theis GmbH, 42279 Wuppertal (DE)
(72) Erfinder: THEIS, Rüdiger, 42489 Wülfrath (DE)
(74) Vertreter: Draudt, Axel Hermann Christian
(86) Internationale Anmeldenummer: PCT/EP2002/001365
(87) Internationale Veröffentlichungsnummer: WO 2002/067109

(56) Entgegenhaltungen:
- EP-A- 0 847 008
- WO-A-98/38570
- DE-A- 19 819 771
- GB-A- 2 348 987

## Beschreibung

Verfahren zum Durchführen eines Updates in einem programmgesteuerten Gerät, programmgesteuertes Gerät und in einem Web-Browser ausführbarer Programmcode

Die Erfindung betrifft ein Verfahren zur Durchführung eines Updates eines Programms in einem programmgesteuerten Gerät, nach dem Oberbegriff des Anspruchs 1. Die Erfindung betrifft ebenso ein solches programmgesteuertes Gerät sowie einen in einem Web-Browser ausführbaren Programmcode.

Programmgesteuerte Geräte werden für eine Vielzahl von Verwendungszwecken eingesetzt, beispielsweise für die automatische Durchführung von beliebigen Messungen. Anstelle einer direkten Bedienmöglichkeit an dem Gerät selber kann dabei eine Verbindung zu einen Standard-Web-Browser vorgesehen sein, über den ein Nutzer das Gerät bedienen kann. Für die Kommunikation mit dem Web-Browser müssen in dem Gerät dann entsprechende Funktionalitäten eines Web-Servers integriert sein.

Bei programmgesteuerten Geräten ist es sinnvoll, wenn sie für die eingesetzten Programme sogenannte "Updates" erlauben, mit denen Programmfehler beseitigt, oder neue Funktionen bzw. sonstige Aktualisierungen in ein vorhandenes Programm integriert werden können. Ein derartiges programmiertes Gerät ist beispielsweise aus WO 98 35870 A bekannt.

Es ist aus der Praxis bekannt, solche Updates über sogenannte "Tools" durchführen zu lassen, die selber die gewünschten Update-Information sowie ein Programm zu deren Einbindung in ein Programm des Geräts enthalten. Das Tool wird über einen PC ausgeführt, der mit dem Gerät verbunden ist. Solche Tools sind jedoch plattformabhängig, d.h., sie lassen sich jeweils ausschließlich mit Pcs mit einer bestimmten Plattform wie Windows, Unix etc. nutzen. Es muß also für jede Plattform ein separates Tool bereitgestellt werden. Hinzu kommt, daß gewünschte Tools für bestimmte Geräte oder für bestimmte Programme in einem Gerät häufig bei einem Anbieter nicht verfügbar oder aktuell sind, und daß die Tools insgesamt uneinheitlich in der Bedienung und im verhalten sind.

Bei einer weiteren aus der Praxis bekannten Möglichkeit zum Durchführen von Updates von programmgesteuerten Geräten liegen die Update-Informationen auf einem Web-Server zum Abruf bereit. Für ein Update wird zunächst eine Update-Datei von dem Web-Server auf eine lokale Festplatte einer Einrichtung mit installiertem Web-Browser geladen. Danach wird ein Upload der auf der Festplatte der Einrichtung gespeicherten Daten zu dem programmgesteuerten Gerät durchgeführt. Bei beiden Datentransfers dient dabei der Web-Browser einem Anwender als Bedienoberfläche. Mit dieser zweiten Update-Möglichkeit kann die allgemeine Verfügbarkeit von stets aktuellen Update-Informationen gewährleistet werden, da die Informationen lediglich einmal zentral auf dem Web-Server bereitgestellt werden müssen. Zudem ist der Einsatz durch die Bedienung über einen Web-Browser plattformunabhängig. Die WO 98 38570 A beschreibt z.B. ein derartiges Verfahren zur Durchführung eines Updates.

Aber auch dieses Verfahren hat mehrere Nachteile. Zum einen wird der Anwender sowohl beim Herunterladen der Update-Datei von dem Web-Server auf die Festplatte der Einrichtung als auch für das Übertragen der Update-Informationen von der Festplatte auf das Gerät jeweils unabhängig voneinander aufgefordert, einen Pfad und einen Dateinamen auszuwählen. Dies kann leicht zu Irrtümern und Fehlbedienungen führen. Zum anderen benötigt die Einrichtung mit dem Web-Browser zum Abspeichern der Update-Informationen eine Festplatte bzw. einen Speicher, der sich wie eine Festplatte verhält. Einige zukünftige kompakte Web-Zugangsgeräte (Web-Appliances) werden jedoch keinen derartigen Speicher mehr aufweisen und dadurch von einem Einsatz für diese Updates ausgeschlossen.

Somit sind die bekannten Optionen zum Durchführen eines Updates von Programmen in einem programmgesteuerten Gerät nicht zufriedenstellend.

Der Erfindung liegt daher die Aufgabe zugrunde, ein Verfahren und ein programmgesteuertes Gerät sowie einen in einem Browser laufenden Programmcode zur Verfügung zu stellen, die ein verbessertes Update eines Programms in einem programmgesteuerten Gerät erlauben.

Diese Aufgabe wird erfindungsgemäß zum einen bei einem Verfahren zur Durchführung eines Updates eines Programms in einem programmgesteuerten Gerät, und zwar mittels Anfordern von Update-Informationen für ein Programm des Geräts von einem Web-Server, durch folgende Schritte gelöst:
- Veranlassen des Gerätes (1), welches einen Netzwerkanschluß und Web-Server-Funktionalitäten aufweist und über den Web-Browser (5) zugänglich ist, durch den Web-Browser (5), Update-Informationen von dem Web-Server (2) anzufordern,
- Herunterladen der angeforderten Update-Informationen von dem Web-Server (2) über das Gerät (1) an den Web-Browser (5), wobei die Update-Informationen durch das Gerät (1) an den Web-Browser (5) geleitet werden,
- Zwischenspeichern der Update-Informationen durch einen im Web-Browser ausführbaren Programmcode, und
- Einprogrammieren der Update-Informationen in das Gerät durch den im Web-Browser ausführbaren Programmcode.

Zum anderen wird die Aufgabe bei einem programmgesteuerten Gerät mit einem Netzwerkanschluß, über den eine Verbindung zu einem Web-Server herstellbar ist, und einem Zugang zu einem Web-Browser, über den das Gerät von einem Nutzer bedienbar ist, erfindungsgemäß gelöst durch:

Web-Funktionalitäten zum Anfordern einer Update-Datei von einem Web-Server auf eine Aufforderung durch einen Web-Browser hin, und zum Weiterleiten einer von einem Web-Server empfangenen Update-Datei an den Web-Browser, und mindestens ein Programm, das über einen im Web-Browser ausführbaren Programmcode anhand von weitergeleiteten Update-Informationen veränderbar ist.

Schließlich wird die Aufgabe erfindungsgemäß auch gelöst durch einen Programmcode, der in einem Web-Browser ausführbar und geeignet ist, über ein programmgesteuertes Gerät erhaltene Update-Informationen zwischenzuspeichern und die zwischengespeicherten Update-Informationen in ein Gerät einzuprogrammieren.

Die Erfindung geht aus von der Idee, daß die Probleme der bekannten Update-Möglichkeiten durch den Einsatz eines in einem Web-Browser ausführbaren Programmcodes vermieden werden können. Der Web-Browser kann dabei in einer beliebigen Einrichtung integriert sein, wie in einem PC oder in einem separaten Web-Zugangsgerät.

Ein besonderer Vorteil der Erfindung ist zunächst dadurch gegeben, daß in dem erfindungsgemäß vorgesehenen, in einem Web-Browser ausführbaren Programmcode sämtliche für das Update erforderlichen Abläufe automatisiert werden können. Somit sind mit dem Verfahren, dem Gerät und dem Programmcode gemäß der Erfindung für ein Update nur minimale Vorgaben durch einen Anwender erforderlich, wodurch auch eine nur minimale Anfälligkeit für Bedienfehler gegeben ist.

Da der Programmcode, der die Update-Informationen in das Gerät einprogrammiert, in einem Web-Browser ausführbar sein soll, kann das Update ferner wie in der zweiten aufgeführten bekannten Methode plattformunabhängig mit einem einheitlichen Programmcode und einer einheitlichen Update-Information erfolgen. Ebenso ist außerdem aufgrund der Bereitstellung der Update-Informationen auf einem Web-Server entsprechend dem Verfahren und dem programmgesteuerten Gerät gemäß Erfindung eine zentrale und damit leicht aktuell und vollständig haltbare Verfügbarkeit von Update-Informationen gegeben, wobei erfindungsgemäß der Abruf von dem Server über das Gerät selber erfolgt. Der Server kann dabei beispielsweise ein von dem Gerätehersteller über das Internet zugänglicher Server sein, er kann aber etwa auch ein Server sein, der innerhalb eines Unternehmens für einen Zugriff durch verschiedene Geräte zur Verfügung steht.

Im Gegensatz zu der zweiten aufgeführten bekannten Methode ist jedoch keine Festplatte in der Einrichtung mit dem Web-Browser erforderlich, auf der eine heruntergeladene Update-Datei zunächst gespeichert wird, da für den in einem Web-Browser ausführbaren Programmcode eine Zwischenspeicherung in einem Arbeitsspeicher ausreichend ist.

Schließlich erlaubt die Erfindung die Verwendung von Standarddiensten wie Web-Browsern und Firewalls, so daß der Einsatz der Erfindung und das Vorsehen von Sicherheitsvorkehrungen mit nur geringem Aufwand verbunden sind.

Vorteilhafte Ausgestaltungen des erfindungsgemäßen Verfahrens, des erfindungsgemäßen programmgesteuerten Geräts und des erfindungsgemäßen in einem Web-Browser ausführbaren Programmcodes gehen aus den Unteransprüchen hervor.

In einer bevorzugten Ausgestaltung der Erfindung ist der im Web-Browser ausführbarer Programmcode ein Java-Applet. Dabei ist Java ist eine von Sun Microsystems entwickelte, objektorientierte Programmiersprache, während mit Applet ein Programm bezeichnet wird, das so gestaltet ist, daß es im Rahmen einer anderen Anwendung ausgeführt werden kann. Java Applets sind die verbreitetsten in einem Web-Browser ausführbaren Programmcodes, da sie hohen Sicherheitsstandards genügen. Diese Sicherheitsstandards stellen unter anderem sicher, daß ein Java-Applet in einem Web-Browser ausschließlich mit einem Server kommunizieren kann, von dem das Java-Applet erhalten wurde.

Dementsprechend wird in einer weiter bevorzugten Ausgestaltung der in dem Web-Browser ausführbare Programmcode in dem programmgesteuerten Gerät gespeichert und dem Web-Browser jeweils für ein Update zur Verfügung gestellt. Dies erlaubt bei Verwendung eines Java-Applets oder eines in einem Web-Browser ausführbaren Programmcodes mit ähnlichen Sicherheitsstandards eine anschließende Kommunikation des Programmcodes mit dem programmgesteuerten Gerät. Alternativ kann der im Browser ausführbare Programmcode in dem Web-Server gespeichert sein und dem Web-Browser über das als Router eingesetzte programmgesteuerte Gerät zur Verfügung gestellt werden. Das ist vor allem für Geräte mit kleinem Speicher von Interesse. Auch in diesem Fall ist für Java- oder ähnliche Applets eine anschließende Kommunikation mit dem programmgesteuerte Gerät möglich. Eine Speicherung eines Java-Applets in einem dem Web-Browser zugeordneten Speicher oder eine direkte Übertragung von einem Web-Server zu dem Web-Browser dagegen wird durch die beschriebenen Sicherheitsvorkehrungen ausgeschlossen, da das Applet dann nicht mit dem programmgesteuerten Gerät in Verbindung treten kann.

Besondere Probleme treten auf, wenn das Netzwerkkommunikationsprogramm des programmgesteuerten Geräts aktualisiert werden soll, da über dieses Programm, das auch die Web-Server-Funktionalitäten des Geräts beinhaltet, jede Kommunikation des Geräts mit einem Web-Browser und einem Web-Server erfolgt. In diesem Fall kann während der Einprogrammierung der Update-Informationen das alte Netzwerkprogramm parallel in einem zweiten Speicher in dem Gerät ablaufen, was aber gewisse Mindestanforderungen an den Speicher stellt, die oftmals unerwünscht sind. Vorteilhafterweise wird deshalb alternativ.während des Einprogrammierens ein besonders einfaches Netzwerkprotokoll benutzt, für das nur wenig Speicher benötigt wird.

Vorzugsweise wird für eine einheitliche Handhabung für alle Updates ein einfaches Übertragungs-Protokoll für die Einprogrammierung der Update-Informationen in das Gerät durch den im Browser ausführbaren Programmcode eingesetzt. Innerhalb der TCP/IP (Transmission Control Protocol/Internet Protocol) Protokollfamilie kommt hierfür vor allem das Trivial File Transfer Protocol (TFTP) in Frage. Solche einfachen Übertragungsprotokolle werden von Standardbrowsern nicht unterstützt, sondern erst durch die erfindungsgemäße Einprogrammierung der Update-Informationen über einen separaten, in einem Browers ausführbaren Programmcode ermöglicht.

Ein weiteres Problem beim Aktualisieren eines Netzwerkkommunikationsprogramms in einem Gerät besteht darin, daß Störungen innerhalb des Update-Prozesses zu inkonsistenten Daten in dem Gerät führen können, was im Extremfall in eine anschließende dauerhafte Kommunikationsunterbrechung bedeuten kann. Aus diesem Grund kann vorgesehen werden, daß ein sogenannter "Bootblock" nicht mit aktualisiert wird. Der Bootblock weist dabei lediglich minimale Kommunikationsfunktionen sowie die Kernprogramme für das Update auf. In der zweiten zum Stand der Technik genannten Methode kommt beim Übertragen der Update-Infomationen von der Festplatte zu dem Gerät über den Web-Browser allerdings das TCP basierte HTTP (Hypertext Transfer Protocol) zum Einsatz, welches nicht in kleine Bootblöcke paßt. Diese Schwierigkeit taucht nicht auf, wenn erfindungsgemäß für die Einprogrammierung der Update-Informationen in das - Gerät durch einen im Web-Browser ausführbaren Programmcode ein vereinfachtes Protokoll wie TFTP verwendet wird.

Für eine erhöhte Störungsresistenz wird außerdem vorgeschlagen, daß der im Web-Browser ausführbare Programmcode und/oder das Gerät eine Funktion aufweisen, die es erlaubt, vor der Einprogrammierung der Update-Informationen in das Gerät die Vollständigkeit des Datentransfers zu kontrollieren. Falls anhand von unvollständigen Daten eine Störung der Internetstrecke zwischen dem Gerät und dem Web-Server entdeckt wird, so kann der Programmcode oder das Gerät eine Fehlerbehebung durchführen, indem beispielsweise eine erneute Übertragung beim Web-Server angefordert wird. In der Phase vor dem Einprogrammieren der Update-Informationen verursachen Störungen im Internet nur Wartezeiten, keine Schäden, so daß eine Überwachung in dieser Phase von großem Vorteil ist.

Hinzu kommt, daß die Risiken des Updates selber durch die Erfindung stark eingegrenzt werden können, da der im Web-Browser ausführbare Programmcode eine Kopie der Update-Informationen gespeichert hat. Bei auftretenden Problemen kann diese Kopie dann einer Fehlerbehebung zugrunde gelegt werden. Die Größe des Netzwerkabstands kann vom Anwender durch die Wahl seines eigenen Standorts selbst bestimmt und damit auch möglichst gering gehalten werden.

Wie bereits erwähnt, kann die Einprogrammierung der Update-Informationen in das Gerät und auch eine eventuell erforderliche Fehlerbehebung mit dem erfindungsgemäßen. Verfahren, Gerät und Programmcode äußerst benutzerfreundlich gestaltet werden, da der im Web-Browser ausführbare Programmcode so gestaltet werden kann, daß sämtliche Prozesse automatisiert ablaufen. Außer dem Starten eines Updates können somit jegliche Aktionen des Anwenders vermieden werden. Ebenso ist aber auch ein interaktives Update unter Einbeziehung von Eingaben eines Anwenders in dem Web-Browser möglich.

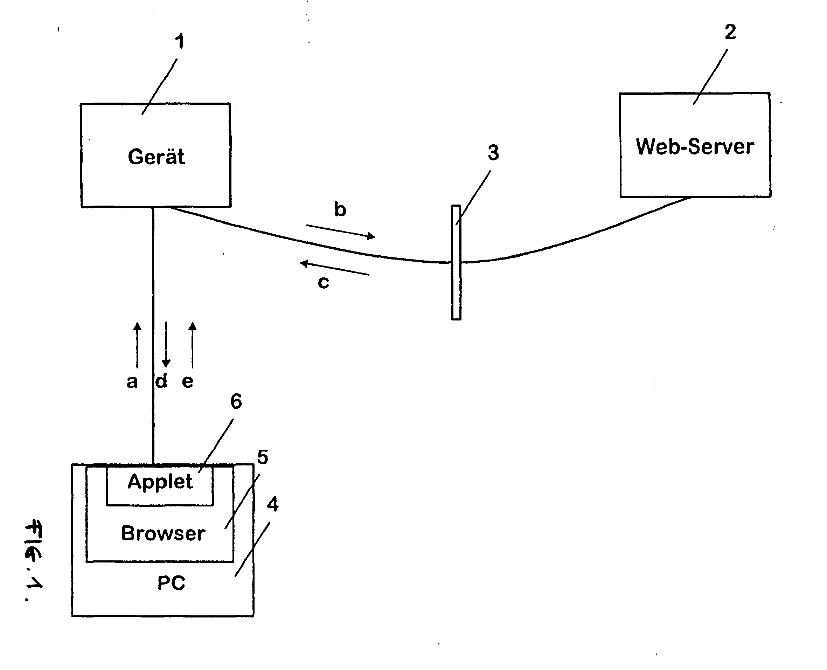

Die Erfindung wird im folgenden anhand eines Ausführungsbeispiels unter Bezugnahme auf eine Zeichnung näher erläutert. Dabei zeigt die einzige Figur schematisch die Einbindung eines programmgesteuerten Geräts in ein Update-System, in dem das erfindungsgemäße Verfahren eingesetzt wird.

Das programmgesteuerte Gerät 1 in der Figur weist einen Netzwerkanschluß auf, über den es über eine Internet-Verbindung mit einem Web-Server 2 verbunden ist. Die Verbindung zwischen dem Gerät und dem Web-Server 2 führt dabei durch eine Firewall 3.

Zusätzlich ist das Gerät 1 über eine Datenleitung mit einem PC 4 verbunden, in dem ein Web-Browser 5 installiert ist. Damit das Gerät 1 mit dem Web-Browser kommunizieren kann, verfügt es außerdem über die hierzu erforderlichen Funktionalitäten eines Web-Servers.

Im normalen Betrieb des Geräts 1 ist die Verbindung zu dem Web-Server 2 nicht vorhanden. Das Gerät ist vielmehr ein Meßgerät, das geeignet ist, programmgesteuert Messungen durchzuführen. Die Bedienung des Geräts 1 zur Vorgabe von Meßparametern und zum Auslesen von Meßergebnissen erfolgt dabei über den Web-Browser 5 in dem angeschlossenen PC 4.

Das erfindungsgemäße Verfahren kommt nun zum Einsatz, wenn ein Programm in dem Gerät 1 aktualisiert werden soll. Das kann beispielsweise gewünscht werden, wenn ein Programm einen Fehler aufweist, oder wenn eine neuere, verbesserte Version des Programms vorliegt. Der Gerätehersteller des Geräts 1 bietet für Aktualisierungen der_Programme in dem Gerät 1 einen Zugriff zu dem Web-Server 2, auf dem jeweils die verfügbaren Update-Informationen für verschiedene Programme abgelegt werden.

Zur Veranlassung eines Updates des Geräts 1 gibt der Anwender über den Web-Browser 5 des PCs 4 einen Update-Befehl ein, mit dem beispielsweise auch die zu - aktualisierenden Programme, oder eventuell einzelne, zusätzlich gewünschte Funktionen für ein Programm identifiziert werden können. Alternativ kann aber auch vorgesehen sein, daß lediglich ein allgemeiner Update-Befehl einzugeben ist, und daß automatisch alle für das Gerät 1 möglichen Updates durchgeführt werden.

Der Web-Browser 5 gibt den Befehl unter Verwendung von HTTP an das Gerät 1 weiter, wobei diese Übertragung in der Figur mit a) bezeichnet ist. Das Gerät 1 nimmt daraufhin als HTTP-Client Kontakt mit dem Web-Server 2 auf. Die HTTP-Übertragung b) für die Kontaktaufnahme ermöglicht dabei in bekannter Weise die Überwindung der Firewall 3. Das Gerät 1 lädt die erforderliche Update-Datei ebenfalls mittels HTTP-Übertragung c) vom Web-Server 2 herunter und leitet die erhaltene Update-Datei unter Verwendung des TFTP als Übertragung d) an den Web-Browser 5 weiter. Zusammen mit der Update-Datei oder auch zu einem früheren Zeitpunkt wird außerdem ein in einem Speicher des Geräts 1 abgelegtes Java-Applet an den Web-Browser 5 übertragen. Alternativ sind für die Übertragungen b) bis d) auch andere Protokolle einsetzbar.

Das Java-Applet 6 wird nun in dem Web-Browser 5 gestartet. Als erste Aktion veranlaßt es dann eine Zwischenspeicherung der Update-Datei in dem Arbeitsspeicher des PC 4. Bereits während des Speicherns kontrolliert das Applet 6 außerdem die Vollständigkeit der im PC 4 empfangenen Update-Datei. Sollte ein detektierter Fehler auf eine Störung in der Internetstrecke zwischen dem Web-Server 2 und der Firewall 3 hindeutet, so fordert das Java-Applet 6 über das Gerät 1 eine erneute Übertragung durch den Web-Server 2 an.

Sobald die Update-Datei vollständig eingetroffen und zwischengespeichert ist, kann das Update vom Java-Applet 6 selbst automatische durchgeführt werden. Hierzu werden die Update-Informationen von dem Java-Applet 6 unter Verwendung des TFTP in das Gerät 1 einprogrammiert. Die Übertragung der hierzu erforderlichen Daten von dem Java-Applet 6 an das Gerät 1 ist in der Figur mit e) bezeichnet. Der Einsatz des einfachen TFTP-Protokolls erlaubt dabei auch ein Update des Netzwerkkommunikationsprogramms.

In dem Fall, daß bei dem Einprogrammieren der Update-Informationen in das Gerät 1 ein Fehler auftritt, kann das Java-Applet 6 anhand der zwischengespeicherten Kopie der Update-Datei, eventuell nach Durchführung eines im Java-Applet 6 vorgesehenen Fehlerbehebungsmechanismus, eine Wiederholung des Einprogrammierens vornehmen, wodurch zusammen mit der anfänglichen Kontrolle der Update-Datei eine hohe Sicherheit vor nicht behebbaren Fehlprogrammierungen gegeben ist.

Da das Gerät über einen Netzwerkanschluß sowie über ein Netzwerkkommunikationsprogramm verfügt und die Updates mittels des angeschlossenen Web-Browsers 5 direkt über das Netzwerk erfolgen, sind weitere Dateneingabeschnittstellen am Gerät 1 überflüssig, sofern diese nicht für die reguläre Funktion des Gerätes 1 selber benötigt werden.

## Patentansprüche

1. Verfahren zur Durchführung eines Updates eines Programms in einem programmgesteuerten Gerät (1), und zwar mittels Anfordern von Update-Informationen für ein Update eines Programms des Geräts (1) von einem Web-Server (2) **gekennzeichnet durch** die weiteren Verfahrensschritte:
- Veranlassen des Gerätes (1), welches einen Netzwerkanschluß und Web-Server-Funktionalitäten aufweist und über den Web-Browser (5) zugänglich ist, **durch** den Web-Browser (5), Update-Informationen von dem Web-Server (2) anzufordern,
- Herunterladen der angeforderten Update-Informationen von dem Web-Server (2) über das Gerät (1) an den Web-Browser (5), wobei die Update-Informationen **durch** das Gerät (1) an den Web-Browser (5) geleitet werden,
- Zwischenspeichern der Update-Informationen **durch** einen im Web-Browser (5) ausführbaren Programmcode (6), und
- Einprogrammieren der Update-Informationen in das Gerät (1) **durch** den im Web-Browser (5) ausführbaren Programmcode (6).

2. Verfahren nach Anspruch 1,
**dadurch gekennzeichnet, daß** als im Web-Browser (5) ausführbarer Programmcode ein Java-Applet (6) verwendet wird.

3. Verfahren nach Anspruch 1 oder 2,
**dadurch gekennzeichnet , daß** der im Web-Browser (5) ausführbare Programmcode (6) in dem programmgesteuerten Gerät (1) gespeichert ist und dem Web-Browser (5) durch das Gerät (1) für die Dauer des Updates zur Verfügung gestellt wird.

4. Verfahren nach Anspruch 1 oder 2,
**dadurch gekennzeichnet daß** der im Web-Browser (5) ausführbare Programmcode (6) in einem Web-Server (2) gespeichert ist und dem Web-Browser (5) über das programmgesteuerte Gerät (1) zur Verfügung gestellt wird.

5. Verfahren nach einem der voranstehenden Ansprüche,
**dadurch gekennzeichnet, daß** der im Web-Browser (5) ausführbare Programmcode (6) die Update-Informationen in das programmgesteuerte Gerät (1) mittels dem Trivial File Transfer Protocol (TFTP) einprogrammiert.

6. Verfahren nach einem der voranstehenden Ansprüche,
**dadurch gekennzeichnet, daß** der im Web-Browser (5) ausführbare Programmcode (6) und/oder das programmgesteuerte Gerät (1) vor der Einprogrammierung der Update-Informationen in das Gerät (1) die Vollständigkeit und/oder Fehlerfreiheit der übermittelten Update-Informationen überprüft und im Falle einer festgestellten Störung eine Fehlerbehebung durchführt.

7. Verfahren nach einem der voranstehenden Ansprüche,
**dadurch gekennzeichnet, daß** die Einprogrammierung der Update-Informationen in das programmgesteuerte Gerät (1) unter Einbeziehung von Eingaben eines Anwenders im Rahmen des in dem Web-Browser (5) ausführbaren Programmcodes (6) erfolgen kann.

8. Programmgesteuertes Gerät (1) mit
- einem Netzwerkanschluß, über den eine Verbindung zu einem web-Server (2) herstellbar ist,
- eine Schnittstelle, über die eine Verbindung mit einem Web-Browser (5) herstellbar ist,
- Web-Funktionalitäten, die es erlauben, auf eine Aufforderung durch einen angeschlossenen Web-Browser (5) hin Update-Informationen von einem angeschlossenen Web-Server (2) anzufordern, und von einem angeschlossenen Web-Server (2) empfangene Update-Informationen an einen angeschlossenen Web-Browser (5) weiterzuleiten, und mit
- mindestens einem Programm, das über einen in einem angeschlossenen Web-Browser (5) ausführbaren Programmcode (6) anhand von an einen solchen Web-Browser (5) weitergeleiteten Update-Informationen veränderbar ist.

9. Programmgesteuertes Gerät (1) nach Anspruch 8,
**gekennzeichnet durch** einen abgespeicherten, in einem Web-Browser (5) ausführbaren Programmcode (6), der einem angeschlossenen Web-Browser (5) für ein Update eines Programms des Geräts (1) zur Verfügung stellbar ist.

10. Programmgesteuertes Gerät (1) nach Anspruch 8 oder 9,
**dadurch gekennzeichnet, daß** der abgespeicherte, in einem Web-Browser (5) ausführbaren Programmcode ein Java-Applet (6) ist.

11. Programmgesteuertes Gerät (1) einem der Ansprüche 8 bis 10,
**gekennzeichnet durch**
Mittel zum Überprüfen der Vollständigkeit und/oder Fehlerfreiheit von von einem angeschlossenen Web-Server (2) erhaltenen Update-Informationen vor einer Weiterleitung an einen angeschlossenen Web-Browser (5) und zum Durchführen einer Fehlerbehebung im Falle einer festgestellten Störung vor einer Weiterleitung der Update-Informationen an einen angeschlossenen Web-Browser (5) .

12. Programmcode (6), der in einem Web-Browser (5) ausführbar und geeignet ist, über ein programmgesteuertes Gerät (1) erhaltene Update-Informationen zwischenzuspeichern- und die zwischengespeicherten Update-Inforamtionen in das Gerät (1) einzuprogrammieren.

13. Programmcode nach Anspruch 12, **dadurch gekennzeichnet, daß** er als Java-Applet (6) ausgebildet ist.

14. Programmcode (6) nach Anspruch 12 oder 13 , **dadurch gekennzeichnet, daß** er geeignet ist, erhaltene. Update-Informationen auf Vollständigkeit und/oder Fehlerfreiheit hin zu überprüfen und im Falle einer festgestellten Störung vor einer Einprogrammierung der Update-Informationen in das Gerät (1) eine Fehlerbehebung durchzuführen.

## Claims

1. A method for performing an update of a program in a program-controlled device (1), namely by means of requesting update information for an update of a program of the device (1) from a Web server (2), **characterised by** the further method steps:
- causing the device (1), that comprises a network connector and Web server functions and is accessible via the Web browser (5), to request through the Web browser (5) update information from the Web server (2),
- downloading the requested update information from the Web server (2) though the device (1) to the Web browser (5), wherein the update information is passed through the device (1) to the Web browser (5),
- caching the update information by a program code (6) executable in the Web browser (5); and
- programming the update information into the device (1) by the program code (6) executable in the Web browser (5).

2. The method according to claim 1,
**characterised in that** a Java applet (6) is used as the program code executable in the Web browser (5).

3. The method according to claim 1 or 2,
**characterised in that** the program code (6) executable in the Web browser (5) is stored in the program-controlled device (1) and is made available to the Web browser (5) by the device (1) for the duration of the update.

4. The method according to claim 1 or 2,
**characterised in that** the program code (6) executable in the Web browser (5) is stored in a Web server (2) and is made available to the Web browser (5) by the program-controlled device (1).

5. The method according to one of the preceding claims,
**characterised in that** the program code (6) executable in the Web browser (5) programs the update information into the program-controlled device (1) by means of trivial file transfer protocol (TFTP).

6. The method according to one of the preceding claims,
**characterised in that** the program code (6) executable in the Web browser (5) and/or the program-controlled device (1) checks the completeness and/or error-freeness of the transmitted update information before programming the update information into the device (1) and, in case an error is detected, an error elimination is carried out.

7. The method according to one of the preceding claims,
**characterised in that** programming of the update information into the program-controlled device (1) can be carried out so as to include user input within the scope of the program code (6) executable in the Web browser (5).

8. A program-controlled device (1) comprising:
- a network connector through which a connection to a Web server (2) can be established,
- an interface through which a connection to a Web browser (5) can be established,
- Web functions that enable, upon request by a connected Web browser (5), to request update information from a connected Web server (2) and to transfer update information received from a connected Web server (2) to a connected Web browser (5), and
- at least one program that is changeable by a program code (6) executable in a connected Web browser (5) by means of update information transferred to such a Web browser (5).

9. The program-controlled device (1) according to claim 8,
**characterised by** a stored program code (6) executable in a Web browser (5) that can be made available to a connected Web browser (5) for carrying out an update of a program of the device (1).

10. The program-controlled device (1) according to claim 8 or 9,
**characterised in that** the stored program code executable in a Web browser (5) is a Java applet (6).

11. The program-controlled device (1) according to one of the claims 8 to 10,
**characterised by**
means for checking the completeness and/or error-freeness of update information received from a connected Web server (2) before transfer to a connected Web browser (5) and for performing an error elimination in case an error is detected before transferring the update information to a connected Web browser (5).

12. A program code (6) that is executable in a Web browser (5) and is suitable to cache update information received via a program-controlled device (1) and to program the update information that has been cached into the device (1).

13. The program code according to claim 12, **characterized in that** it is configured as a Java applet (6).

14. The program code (6) according to claim 12 or 13, **characterised in that** it is suitable to check received update information in regard to completeness and/or error-freeness and, in case an error is detected, to perform an error elimination before programming the update information into the device (1).

## Revendications

1. Procédé pour effectuer une mise à jour d'un programme dans un appareil commandé par programme (1), grâce à la demande d'informations de mise à jour auprès d'un serveur Web (2) pour une mise à jour d'un programme de l'appareil (1), **caractérisé par** les étapes de procédé supplémentaires qui consistent :
- à amener grâce au navigateur Web (5) l'appareil (1), qui comporte une connexion au réseau et des fonctionnalités de serveur Web et qui est accessible par l'intermédiaire dudit navigateur Web (5), à demander des informations de mise à jour au serveur Web (2),
- à télécharger les informations de mise à jour demandées du serveur Web (2) vers le navigateur Web (5) par l'intermédiaire de l'appareil (1), les informations de mise à jour étant transmises au navigateur Web (5) par l'appareil (1),
- à stocker temporairement les informations de mise à jour grâce à un code de programme (6) exécutable dans le navigateur Web (5), et
- à programmer les informations de mise à jour dans l'appareil (1) grâce au code de programme (6) exécutable dans le navigateur Web (5).

2. Procédé selon la revendication 1, **caractérisé en ce qu'**on utilise comme code de programme exécutable dans le navigateur Web (5) une Applet Java (6).

3. Procédé selon la revendication 1 ou 2,
**caractérisé en ce que** le code de programme (6) exécutable dans le navigateur Web (5) est mis en mémoire dans l'appareil commandé par programme (1) et est fourni par l'appareil (1) au navigateur Web (5) pour la durée de la mise à jour.

4. Procédé selon la revendication 1 ou 2,
**caractérisé en ce que** le code de programme (6) exécutable dans le navigateur Web (5) est mis en mémoire dans un serveur Web (2) et est fourni au navigateur Web (5) par l'intermédiaire de l'appareil commandé par programme (1).

5. Procédé selon l'une des revendications précédentes, **caractérisé en ce que** le code de programme (6) exécutable dans le navigateur Web (5) programme les informations de mise à jour dans l'appareil commandé par programme (1) à l'aide du protocole de transfert de fichiers simplifié (TFTP).

6. Procédé selon l'une des revendications précédentes, **caractérisé en ce que** le code de programme (6) exécutable dans le navigateur Web (5) et/ou l'appareil commandé par programme (1) vérifient avant la programmation des informations de mise à jour dans l'appareil (1) que les informations de mise à jour transmises sont complètes et/ou sans erreur, et effectuent une suppression d'erreur au cas où un incident est constaté.

7. Procédé selon l'une des revendications précédentes, **caractérisé en ce qu'**on peut programmer les informations de mise à jour dans l'appareil commandé par programme (1) en intégrant des entrées d'un utilisateur dans le cadre du code de programme (6) exécutable dans le navigateur (5).

8. Appareil commandé par programme (1), comprenant
- une connexion au réseau grâce à laquelle une liaison peut être établie avec un serveur Web (2),
- une interface par l'intermédiaire de laquelle une liaison peut être établie avec un navigateur Web (5),
- des fonctionnalités Web qui permettent, sur appel d'un navigateur Web (5) connecté, de demander des informations de mise à jour à un serveur Web (2) connecté et de transmettre à un navigateur Web (5) connecté des informations de mise à jour reçues par un serveur Web (2) connecté, et
- au moins un programme qui peut être modifié à l'aide d'informations de mise à jour transmises à un navigateur Web (5), par l'intermédiaire d'un code de programme (6) exécutable dans ce navigateur Web (5) connecté.

9. Appareil commandé par programme (1) selon la revendication 8, **caractérisé par** un code de programme (6) qui est mis en mémoire, qui est exécutable dans un navigateur Web (5) et qui peut être fourni à un navigateur Web (5) raccordé, pour une mise à jour d'un programme de l'appareil (1).

10. Appareil commandé par programme (1) selon la revendication 8 ou 9, **caractérisé en ce que** le code de programme qui est mis en mémoire et qui est exécutable dans un navigateur Web (5) est une Applet Java.

11. Appareil commandé par programme (1) selon l'une des revendications 8 à 10, **caractérisé par** des moyens pour vérifier, avant une transmission à un navigateur Web (5) raccordé, que les informations de mise à jour reçues par un serveur Web (2) connecté sont complètes et/ou sans erreur et pour effectuer une suppression d'erreur avant une transmission des informations de mise à jour à un navigateur Web (5) connecté, au cas où un incident est constaté.

12. Code de programme (6) qui est exécutable dans un navigateur Web (5) et qui est apte à stocker temporairement les informations de mise à jour reçues par l'intermédiaire d'un appareil commandé par programme (1) et à programmer dans l'appareil (1) les informations de mise à jour stockées temporairement.

13. Code de programme selon la revendication 12, **caractérisé en ce qu'**il est conçu comme une Applet Java (6).

14. Code de programme (6) selon la revendication 12 ou 13, **caractérisé en ce qu'**il est apte à vérifier que les informations de mise à jour reçues sont complètes et/ou sans erreur, et à effectuer une suppression d'erreur avant une programmation des informations de mise à jour dans l'appareil (1), au cas où un incident est constaté.
